# EUROPÄISCHE PATENTANMELDUNG

(11) **EP 2 273 103 A2**
(43) Veröffentlichungstag der Anmeldung: **12.01.2011**
(21) Anmeldenummer: 10005434.5
(22) Anmeldetag: 26.05.2010
(51) Int. Cl.: F03D 1/06

(54) **Rotorblatt für eine Windenergieanlage und Verfahren zu dessen Herstellung**

(30) Priorität: 07.07.2009 DE 102009031947
(71) Anmelder: Nordex Energy GmbH, 22848 Norderstedt (DE)
(72) Erfinder: Gau, Lutz-Reiner, 14478 Potsdam (DE)
(74) Vertreter: Hauck Patent- und Rechtsanwälte

(57) **Zusammenfassung**

Rotorblatt für eine Windenergieanlage mit
• mindestens einem Paar einander gegenüberliegender Gurte (14,16), die sich in Längsrichtung des Rotorblatts erstrecken und auf das Rotorblatt einwirkende Kräfte aufnehmen, und
• mindestens einem Steg (18,20), der zwei Stirnflächen (22), die jeweils einem der beiden Gurte (14,16) zugewandt sind, und zwei Seitenflächen (24) aufweist, sich zwischen den beiden Gurten (14,16) in Längsrichtung des Rotorblatts erstreckt und fest mit den beiden Gurten (14,16) verbunden ist, wobei
• mindestens ein in Längsrichtung des Rotorblatts verlaufendes, aus einem faserverstärkten Kunststoffmaterial bestehendes, im Querschnitt ein- oder mehrteiliges Verbindungsprofil (26,28,30,32) mit einer Aufnahme, in die der mindestens eine Steg (18,20) eingesetzt ist, wobei
• eine erste Fläche (42) des Verbindungsprofils (26,28,30,32) mit einem der Gurte (14,16) verklebt ist und
• eine zweite Fläche des Verbindungsprofils (26,28,30,32) mit einer ersten Seitenfläche (24) des mindestens einen Stegs (18,20) verklebt ist.

## Beschreibung

Die Erfindung betrifft ein Rotorblatt für eine Windenergieanlage, das mindestens ein Paar einander gegenüberliegender Gurte, die sich in Längsrichtung des Rotorblatts erstrecken und auf das Rotorblatt einwirkende Kräfte aufnehmen, und mindestens einen Steg, der zwei Stirnflächen, die jeweils einem der beiden Gurte zugewandt sind, und zwei Seitenflächen besitzt, sich zwischen den beiden Gurten in Längsrichtung des Rotorblatts erstreckt und fest mit den beiden Gurten verbunden ist, aufweist, sowie ein Verfahren zur Herstellung derartiger Rotorblätter.

Bekannte Rotorblätter dieser Bauart bestehen aus zwei Halbschalen, die miteinander verbunden sind. Jede Halbschale weist, in der Regel im Bereich der größten Profilhöhe, einen der Gurte auf. Die Gurte können integral mit den Halbschalen gefertigt sein und verleihen dem Rotorblatt unter anderem seine Biegeschlagsteifigkeit. Von großer Bedeutung für die Festigkeit des Rotorblatts ist die Qualität der Verbindung des mindestens einen Stegs mit den Gurten. In der Regel wird eine großflächige Verklebung vorgenommen. Hierzu weisen die Stege bekannter Rotorblätter an ihren den Gurten zugewandten Enden abgewinkelte Befestigungsabschnitte auf, die mit den Gurten verklebt werden. Bekannt sind im Querschnitt C-förmige Stege, bei denen die abgewinkelten Abschnitte sich zu einer Seite des Stegs erstreckende Flansche bilden, und im Querschnitt doppel-T-förmige Stege, deren Befestigungsabschnitte sich ausgehend von dem Steg zu beiden Seiten erstrecken.

Mit derartigen Befestigungsabschnitten an den Stegen kann eine ausreichend feste Verbindung zu den Gurten erreicht werden. Der Einbau der Stege ist jedoch problematisch. In der Regel wird zunächst der gesamte Steg mit dem Gurt der ersten Halbschale verklebt. Um den Steg möglichst zeichnungsgerecht zu positionieren, kann eine sogenannte Stegsetzvorrichtung verwendet werden. Wegen der nicht immer maßhaltigen Innenkontur der Halbschale bzw. der an dem Befestigungsabschnitt des Stegs angrenzenden Kontaktfläche des Gurtes kann es jedoch leicht zu Positionsabweichungen des Steges kommen. Die Ungenauigkeiten in der Innenkontur der Halbschalen ergeben sich durch die Fertigung der Halbschalen in offenen Formen. Insbesondere können beim Laminieren der Glasgelege Wellen oder Falten entstehen. Anschließend wird die zweite Halbschale aufgesetzt und mit der ersten Halbschale und dem Steg verklebt. Diese Verklebung wird als Blindverklebung bezeichnet, da nach dem Aufsetzen der zweiten Halbschale große Bereiche nicht mehr zugänglich sind und die Qualität daher nicht oder nur schwer kontrolliert werden kann.

Wegen der genannten Toleranzen der Innenkonturen der Halbschalen und der Ungenauigkeiten bei der Positionierung der Stege können aufwendige Nacharbeiten erforderlich sein: Wird die vorgesehene lichte Innenweite zwischen den Halbschalen unterschritten, können die Stege sperren und eine exakte Anordnung der beiden Halbschalen unmöglich machen. In diesen Fällen muss der Steg in Längsrichtung eingeschnitten und seine obere Hälfte mit geeigneten Mitteln in eine tiefere Position gebracht werden. Der Trennschnitt kann dann seitlich mit festgelegtem Lagenaufbau beidseitig überlaminiert werden. Wird die vorgesehene lichte Innenweite zwischen den beiden Halbschalen überschritten, können die Klebespalte für die Verklebung von Stegen und Halbschaleninnenseiten zu groß werden, was ein Auflaminieren von Lagen auf den Klebeflächen der Stege erforderlich machen kann, um das betreffende Spaltmaß zu verringern.

In der nachveröffentlichten Druckschrift DE 10 2008 038 620 A1 ist eine Fertigungsform zur Fertigung eines Rotorblatts für eine Windenergieanlage beschrieben, wobei das fertige Rotorblatt wenigstens in einem Bereich seiner Längserstreckung, zwischen einer Rotorblattwurzel und einer Rotorblattspitze, ein aerodynamisches Querschnittsprofil aufweist, das eine Profilvorderkante und eine Profilhinterkante aufweist, die über eine Saugseite und eine Druckseite des Querschnittsprofils miteinander verbunden sind.

Aus der Druckschrift WO 2008/104171 A2 ist eine Verstärkungsstruktur für ein Rotorblatt einer Windenergieanlage bekannt. Zwei Verstärkungsteile sind mit zwei Rotorblattteilen verbunden, wobei eines der Verstärkungsteile Einstellmittel aufweist, so dass die beiden Verstärkungsteile während der Montage des Rotorblatts gegeneinander verschiebbar sind. Die Einstellmittel üben eine Kraft aus, die die Verstärkungsteile von einander zu entfernen sucht.

Aus der Druckschrift WO 2006/039953 A1 ist ein Rotorblatt für eine Windenergieanlage bekannt, bei dem längs der Berührungsstellen einer Oberschale und Längsspanten des Rotorblatts zur Verstärkung Winkelstrukturen aus Matten mit einem Fasermaterial aufgeklebt sind.

Aus der Druckschrift WO 2008/071195 A2 ist ein verstärktes aerodynamisches Profil bekannt. Im Inneren des Profils sind unterschiedliche Verstärkungsstrukturen angeordnet.

Aus der Druckschrift DE 10 2008 037 386 A1 sind Windkraftanlagenholme mit gegliederten Scherstegen bekannt. Ein Schersteg erstreckt sich zwischen einer Druckseite und einer Saugseite eines Rotorflügels. Der Schersteg weist einen nachgiebigen und/oder erweiterbaren Abstandhalter auf, um den Schersteg einzupassen.

Davon ausgehend ist es die Aufgabe der Erfindung, ein Rotorblatt und ein Verfahren zu dessen Herstellung anzugeben, dass eine bessere Verbindung zwischen den Stegen und den Gurten des Rotorblatts sowie eine einfachere und maßhaltigere Montage des Rotorblatts ermöglicht.

Diese Aufgabe wird gelöst durch das Rotorblatt mit den Merkmalen des Anspruchs 1. Vorteilhafte Ausgestaltungen sind in den sich anschließenden Unteransprüchen angegeben.

Das erfindungsgemäße Rotorblatt für eine Windenergieanlage hat:
- mindestens ein Paar einander gegenüberliegender Gurte, die sich in Längsrichtung des Rotorblatts erstrecken und auf das Rotorblatt einwirkende Kräfte aufnehmen, und
- mindestens einen Steg, der zwei Stirnflächen, die jeweils einem der beiden Gurte zugewandt sind, und zwei Seitenflächen aufweist, sich zwischen den beiden Gurten in Längsrichtung des Rotorblatts erstreckt und fest mit den beiden Gurten verbunden ist, wobei
- mindestens ein in Längsrichtung des Rotorblatts verlaufendes, aus einem faserverstärkten Kunststoffmaterial bestehendes, im Querschnitt ein- oder mehrteiliges Verbindungsprofil mit einer Aufnahme vorhanden ist, in die der mindestens eine Steg eingesetzt ist,
- eine erste Fläche des Verbindungsprofils mit einem der Gurte verklebt ist und
- eine zweite Fläche des Verbindungsprofils mit einer ersten Seitenfläche des mindestens einen Stegs verklebt ist.

Die beiden Gurte können mit jeweils einer Halbschale, die eine Außenkontur des Rotorblatts bildet, verbunden oder integral mit dieser gefertigt sein. Die Gurte verleihen dem Rotorblatt unter anderem seine Biegeschlagsteifigkeit. Das Rotorblatt kann mehrere Paare einander gegenüberliegender Gurte aufweisen, beispielsweise zwei Hauptgurte, die im Bereich der größten Profilhöhe angeordnet sind, und zwei Endkantengurte, die im Bereich der Endkante des Profils verlaufen.

Zwischen jedem Paar einander gegenüberliegender Gurte kann ein einziger Steg oder können mehrere Stege angeordnet sein. Beispielsweise können zwei Hauptgurte durch zwei in einem Abstand voneinander angeordnete Stege verbunden sein. Die beiden Stege können parallel oder nicht parallel zueinander angeordnet sein. Zusätzlich vorhandene Endkantengurte können z.B. durch einen einzigen Steg verbunden sein.

Der mindestens eine Steg kann im Querschnitt beispielsweise rechteckig oder trapezförmig sein. Möglich ist jedoch auch ein Querschnitt mit gekrümmten und/oder gestuften Kanten, bei dem die Dicke des Stegs variieren kann. Querschnitt bedeutet jetzt und im Folgenden stets einen Schnitt senkrecht zu einer Längsachse des Rotorblatts. Die beiden Seitenflächen des mindestens einen Stegs können jeweils in einer Ebene angeordnet sein, die sich von einem der beiden Gurte zu dem gegenüberliegenden Gurt erstreckt.

Das Verbindungsprofil stellt die Verbindung zwischen einem der Gurte und dem mindestens einen Steg her. Es weist eine Aufnahme auf, in die der mindestens eine Steg eingesetzt ist. Die Aufnahme ist insbesondere so beschaffen, dass sie die korrekte Positionierung des Stegs vereinfacht. Insbesondere kann die Aufnahme die Position des mindestens einen Stegs in zwei oder drei Richtungen vorgeben, beispielsweise nach links, nach unten und nach rechts eine Begrenzung bilden.

Die Verklebung der ersten Fläche des Verbindungsprofils mit einem der Gurte und die Verklebung der zweiten Fläche des Verbindungsprofils mit einer ersten Seitenfläche des mindestens einen Stegs ist bevorzugt eine großflächige Verklebung mit einer Kontaktfläche, die größer ist als eine der Stirnflächen des mindestens einen Stegs. Dadurch wird eine stabile Verklebung begünstigt.

Durch die Erfindung kann die Herstellung und Montage des Rotorblatts wesentlich vereinfacht werden. Insbesondere können die Stege eine einfachere Geometrie aufweisen, als aus dem Stand der Technik bekannte Stege mit abgewinkelten Befestigungsabschnitten. Sie können insbesondere aus einem ebenen Laminat hergestellt werden. Die Verbindungsflächen zwischen den Stegen und Gurten können freier dimensioniert werden durch entsprechende Wahl des Querschnitts des Verbindungsprofils. Das Verbindungsprofil kann einfach unter Verwendung industrieller Verfahren, insbesondere im Extrudierverfahren, hergestellt werden.

Durch die erfindungsgemäß vorgesehene Verklebung des Verbindungsprofils mit einer Seitenfläche des mindestens einen Stegs wirken sich Abweichungen in der lichten Innenweite zwischen den Gurten nicht mehr gravierend auf die Qualität und Geometrie der Verklebung zwischen Steg und Gurt aus, weil die häufig unvermeidbaren Ungenauigkeiten nicht in Richtung des Spaltmaßes zwischen den zu verklebenden Teilen auftreten, wie bei einer konventionellen Verklebung eines dem Gurt zugewandten Befestigungsflansches mit dem Gurt. Stattdessen können bei der Erfindung derartige Toleranzen einfach durch eine bezüglich der Klebefuge seitliche Verschiebung der zu verklebenden Teile ausgeglichen werden. Insbesondere kann der Steg etwas weniger tief in die Aufnahme eines Verbindungsprofils eingesetzt werden, wenn die lichte Innenweite größer ist als ihr Sollwert, oder etwas tiefer, wenn die lichte Innenweite kleiner ist als ihr Sollwert. Diese Korrekturen haben bei einer ausreichenden seitlichen Erstreckung der Klebefuge, die durch entsprechende Wahl der Tiefe der Aufnahme vorgebbar ist, keinen nennenswerten Einfluss auf die Festigkeit der Klebverbindung.

Der Winkel zwischen der ersten Seitenfläche und der Stirnfläche des mindestens einen Stegs kann ein rechter Winkel sein oder von einem rechten Winkel abweichen, insbesondere um einer Neigung des Stegs gegenüber dem Gurt Rechnung zu tragen. Beispielsweise können die erste Seitenfläche und die Stirnfläche einen Winkel im Bereich von 75° bis 105° einschließen. Dabei kann die Stirnfläche bevorzugt parallel zu dem benachbarten Gurt angeordnet sein. Bevorzugt kann zwischen der ersten Fläche des Verbindungsprofils, die mit dem Gurt verklebt ist, und der zweiten Fläche des Verbindungsprofils, die mit der ersten Seitenfläche des Stegs verklebt ist, der gleiche Winkel ausgebildet sein. In diesem Fall sind die erste Seitenfläche des Stegs und die zweite Fläche des Verbindungsprofils parallel angeordnet, so dass sich eine gleichmäßige Klebefuge ergibt.

Gemäß einer Ausgestaltung ist die Aufnahme eine Nut in dem Verbindungsprofil. Die Nut kann beispielsweise einen rechteckigen Querschnitt aufweisen. Die seitlichen Flächen der Nut können jedoch auch unter einem Winkel zueinander angeordnet sein oder eine unterschiedliche Höhe aufweisen. Die Verwendung einer Nut als Aufnahme ermöglicht eine genaue Positionierung des mindestens einen Stegs in der Nut.

Gemäß einer Ausgestaltung ist eine dritte Fläche des Verbindungsprofils mit einer zweiten, der ersten Seitenfläche gegenüberliegenden Seitenfläche des mindestens einen Stegs verklebt. Es erfolgt also eine beidseitige und daher besonders feste Verklebung des Stegs.

In einer Ausgestaltung ist das Verbindungsprofil im Querschnitt zweiteilig und besteht aus zwei benachbart angeordneten Profilen. Die Aufnahme des Verbindungsprofils ist dann zwischen den benachbarten Profilen ausgebildet. Die beiden benachbarten Profile können in einem vorgegebenen Abstand mit dem Gurt verklebt werden. Die Profile können beispielsweise einen winkelförmigen, dreieckigen oder kastenförmigen Querschnitt aufweisen.

Gemäß einer Ausgestaltung ist das Verbindungsprofil im Querschnitt einteilig mit einem U-förmigen Abschnitt, der eine Basis und zwei Schenkel aufweist, die die Aufnahme bilden. Ein im Querschnitt einteiliges Verbindungsprofil kann besonders einfach mit dem Gurt verklebt werden, wobei die Maßhaltigkeit der Aufnahme durch die entsprechend genaue Vorfertigung des Verbindungsprofils sichergestellt ist. Die zweite Fläche des Verbindungsprofils kann von einer Innenseite eines Schenkels, die dritte Fläche des Verbindungsprofils von der Innenseite des gegenüberliegenden Schenkels des U-Profils gebildet werden. Die Schenkel des U-Profils können parallel zueinander ausgerichtet sein. Die Verbindungsbereiche zwischen den Schenkeln und der Basis des U-Profils können eckig oder mehr oder weniger stark abgerundet ausgeführt sein. Die Übergangsbereiche der Seitenflächen zur Stirnfläche des mindestens einen Stegs können dann ebenfalls entsprechend abgerundet sein.

In einer Ausgestaltung ist die erste Fläche des Verbindungsprofils von der Außenseite der Basis des U-förmigen Abschnitts gebildet.

In einer Ausgestaltung weist das Verbindungsprofil im Querschnitt mindestens eine Verbreiterung auf, die sich seitlich an die Basis des U-förmigen Abschnitts anschließt. Es kann lediglich eine Verbreiterung vorgesehen sein, die sich an eine Seite der Basis des U-förmigen Abschnitts anschließt, während der von dieser Verbreiterung entfernte Schenkel des U-Profils den seitlichen Abschluss des Verbindungsprofils bildet. Es können jedoch auch zwei Verbreiterungen an beiden Seiten der Basis des U-förmigen Abschnitts vorgesehen sein, sodass sich beide Schenkel des U-Profils in einem Abstand von den seitlichen Kanten der verbreiterten Grundfläche des Verbindungsprofils befinden. Die mindestens eine Verbreiterung ermöglicht eine festere Klebverbindung zwischen dem Verbindungsprofil und dem Gurt, weil die zu verklebende Fläche vergrößert wird.

Gemäß einer Ausgestaltung sind die von der Basis entfernten Enden der Schenkel im Querschnitt des Verbindungsprofils zu der Aufnahme hin geneigt. Die geneigten Flächen erleichtern das Einführen des mindestens einen Stegs in die zwischen den beiden Schenkeln gebildete Aufnahme des Verbindungsprofils.

Gemäß einer Ausgestaltung ist eine Stirnfläche des mindestens einen Stegs mit dem Verbindungsprofil verklebt. Dies ermöglicht eine weitere Steigerung der Festigkeit der Klebverbindung. Im Falle eines Verbindungsprofils mit im Querschnitt U-förmigem Abschnitt kann die Stirnfläche des mindestens einen Stegs insbesondere mit einer Innenseite einer Basis des U-Profils verklebt sein.

In einer Ausgestaltung besteht das Verbindungsprofil aus einem faserverstärkten Kunststoffmaterial. Dieses Material weist eine hohe Festigkeit auf und ist insbesondere für die Verklebung mit dem Gurt und dem mindestens einen Steg, die ebenfalls aus faserverstärktem Kunststoffmaterial bestehen können, besonders günstig. Profile aus faserverstärktem Kunststoffmaterial können zudem leicht unter Verwendung industrieller Techniken hergestellt werden.

Gemäß einer Ausgestaltung sind in Längsrichtung des Rotorblatts mehrere Verbindungsprofile aneinandergereiht. Grundsätzlich kann ein einziges Verbindungsprofil verwendet werden, das sich über die gesamte Länge des Rotorblatts bzw. des mindestens einen Stegs erstreckt. Einfacher zu transportieren und zu lagern ist jedoch ein aus mehreren Teilstücken bestehendes Verbindungsprofil. Beispielsweise können einige Meter lange Verbindungsprofile, beispielsweise mit einer Länge von fünf Metern, verwendet werden. Die einzelnen Teilstücke können über geeignete Verbindungsmittel miteinander verbunden werden.

In einer Ausgestaltung ändert sich der Querschnitt des Verbindungsprofils in Längsrichtung des Rotorblatts. Diese Lösung kommt sowohl bei Verwendung eines einzigen Verbindungsprofils als auch bei Verwendung eines segmentierten Verbindungsprofils in Betracht. Sofern mehrere Verbindungsprofile aneinandergereiht werden, können diese einen jeweils konstanten Querschnitt aufweisen, was deren Fertigung besonders einfach macht. Alternativ kann sich der Querschnitt des Verbindungsprofils über die gesamte Länge kontinuierlich oder gestuft ändern. Insbesondere sinnvoll ist eine Verringerung der Höhe des Verbindungsprofils zu den Blattspitzen hin, entsprechend der Verringerung der Höhe des mindestens einen Stegs.

In einer Ausgestaltung ist der mindestens eine Steg auch mit dem dem ersten Gurt gegenüberliegenden Gurt über ein Verbindungsprofil verbunden, wobei die Verbindung entsprechend einem der vorstehend erläuterten Ansprüche ausgestaltet ist. In diesem Fall ist der mindestens eine Steg sowohl mit der Unter- als auch mit der Oberschale des Rotorblatts mit Hilfe eines Verbindungsprofils verbunden.

Die oben genannte Aufgabe wird ebenfalls gelöst durch das Verfahren zur Herstellung eines Rotorblatts einer Windenergieanlage mit den Merkmalen des Anspruchs 12. Vorteilhafte Ausgestaltungen des Verfahrens sind in den sich anschließenden Unteransprüchen angegeben.

Das erfindungsgemäße Verfahren weist die folgenden Schritte auf:
- Bereitstellen einer ersten Halbschale, die einen ersten Gurt aufweist, der sich in Längsrichtung des Rotorblatts erstreckt und auf das Rotorblatt einwirkende Kräfte aufnimmt,
- Verkleben einer ersten Fläche eines im Querschnitt ein- oder mehrteiligen Verbindungsprofils mit dem ersten Gurt, wobei das Verbindungsprofil in Längsrichtung des Gurtes angeordnet ist und aus einem faserverstärkten Kunststoffmaterial besteht,
- Einsetzen mindestens eines Stegs, der eine Stirnfläche, die im fertigen Rotorblatt dem ersten Gurt zugewandt ist, und zwei Seitenflächen aufweist, in eine Aufnahme des Verbindungsprofils,
- Verkleben einer zweiten Fläche des Verbindungsprofils mit einer ersten Seitenfläche des mindestens einen Stegs,
- Verbinden einer zweiten Halbschale, die einen im fertigen Rotorblatt dem ersten Gurt gegenüberliegenden zweiten Gurt aufweist, mit der ersten Halbschale und dem mindestens einen Steg.

Dieses Verfahren vereinfacht die Herstellung des Rotorblatts erheblich, insbesondere weil das Einsetzen des Steges in das zuvor mit dem Gurt verklebte Verbindungsprofil einfach ist und eine genaue Positionierung des mindestens einen Stegs ermöglicht.

Hinsichtlich der bereits bei der Erläuterung des erfindungsgemäßen Rotorblatts diskutierten Merkmale wird auf diese Erläuterungen verwiesen, die sich analog auf die korrespondierenden Verfahrensmerkmale beziehen.

Gemäß einer Ausgestaltung des Verfahrens wird für das Verkleben der ersten Fläche des Verbindungsprofils mit dem ersten Gurt und/oder der zweiten Fläche des Verbindungsprofils mit der ersten Seitenfläche des mindestens einen Stegs eine Positionierhilfe verwendet. Die Positionierhilfe kann beispielsweise eine optische Markierung, etwa unter Verwendung einer Laserprojektion, sein. Es kann sich auch um eine mechanische Halterung handeln, die die Anordnung des Verbindungsprofils bzw. des mindestens einen Stegs gegenüber dem jeweiligen Gurt bzw. der jeweiligen Halbschale des Rotorblatts oder einer für die Fertigung dieser Halbschale verwendeten Form vorgibt.

Gemäß einer Ausgestaltung des Verfahrens wird die Aufnahme des Verbindungsprofils vor dem Einsetzen des mindestens einen Stegs bis zu einem vorgegebenen Füllstand mit Klebstoff gefüllt. Grundsätzlich kann der Klebstoff auch auf die zu verklebenden Kontaktflächen des mindestens einen Stegs aufgetragen werden. Ein planmäßiges Befüllen der Aufnahme erleichtert jedoch die richtige Menge an Klebstoff aufzutragen. Durch das Einsetzen des mindestens einen Stegs in die mindestens teilweise mit Klebstoff befüllte Aufnahme wird zudem eine gleichmäßige Verteilung des Klebstoffs und gute Benetzung aller zu verklebenden Kontaktflächen des mindestens einen Stegs und des Verbindungsprofils erreicht. Wahlweise kann nach dem Füllen der Aufnahme mit dem Klebstoff die Klebstoffanordnung mit einer Lagesicherung zur Verhinderung des Abtropfens oder Auslaufens des Klebstoffs aus der Aufnahme gesichert werden. Diese Lagesicherung, beispielsweise ein streifenförmiges Material, kann dann unmittelbar vor dem Einsetzen des Stegs in die Aufnahme entfernt werden.

Gemäß einer Ausgestaltung wird zur Verbindung des mindestens einen Stegs mit dem zweiten Gurt ebenfalls ein Verbindungsprofil mit einer Aufnahme für den mindestens einen Steg verwendet, wobei dieses Verbindungsprofil mit dem zweiten Gurt und einer Seitenfläche des mindestens einen Stegs verklebt wird. Dabei können die Verbindungsprofile, die mit den beiden Gurten verklebt sind, wahlweise im gleichen Arbeitsgang mit dem mindestens einen Steg verklebt werden.

Gemäß einer weiteren Ausgestaltung des Verfahrens sind die Elemente des Rotorblatts gemäß einem der Ansprüche 1 bis 11 ausgestaltet. Die diesbezüglich erläuterten Merkmale und Vorteile können dann auch mit dem entsprechend ausgestalteten Verfahren erreicht werden.

Die Erfindung wird nachfolgend anhand von in Figuren dargestellten Ausführungsbeispielen näher erläutert. Es zeigen:
- Fig. 1: einen Ausschnitt eines erfindungsgemäßen Rotorblatts im Querschnitt,
- Fig. 2 a) - d): unterschiedliche Verbindungsprofile im Querschnitt,
- Fig. 3 a) - g): die Schritte des Verfahrens anhand einer schematischen Quer- schnittsdarstellung eines erfindungsgemäßen Rotorblatts.

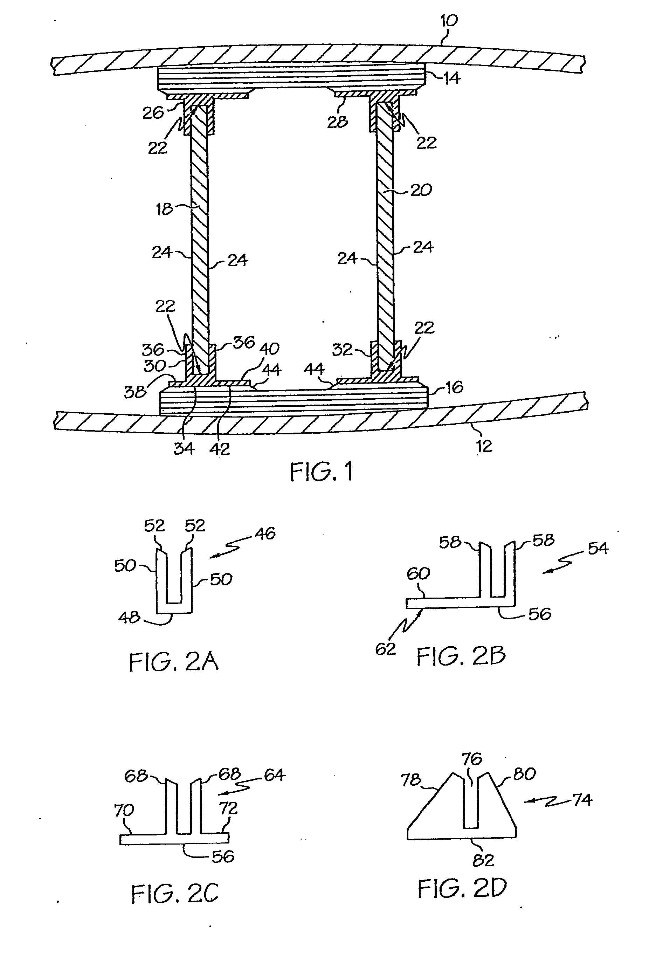

Figur 1 zeigt einen Ausschnitt aus einem Querschnitt durch ein erfindungsgemäßes Rotorblatt. Am oberen Rand der Figur ist die obere Halbschale 10 angedeutet, die die aerodynamische Hülle des Rotorblatts bildet. Entsprechend befindet sich am unteren Rand der Figur die untere Halbschale 12 des Rotorblatts. Ein Gurt 14 des Rotorblatts ist mit der ersten Halbschale 10, ein Gurt 16 des Rotorblatts ist mit der zweiten Halbschale 12 fest verbunden. Die beiden Gurte 14, 16 bestehen jeweils aus einer Vielzahl von Glasgelegen, die z. B. mit einem Polyester- oder Epoxydharz getränkt und zu einem Laminat verklebt sind. Die Gurte 14, 16 sind im Bereich der größten Profilhöhe des Rotorblatts angeordnet und erstrecken sich in dessen Längsrichtung. Die beiden Gurte 14, 16 liegen einander gegenüber.

Die beiden Gurte 14, 16 sind durch zwei Stege 18, 20 fest miteinander verbunden, die sich zwischen den beiden Gurten 14, 16 in Längsrichtung des Rotorblatts erstrecken. Jeder der Stege 18, 20 weist zwei Stirnflächen 22 und zwei Seitenflächen 24 auf.

Weiterhin gibt es vier Verbindungsprofile 26, 28, 30 und 32. Die Verbindungsprofile 26 und 28 verbinden den Steg 18 bzw. 20 mit dem Gurt 14. Die Verbindungsprofile 30 und 32 verbinden die Stege 18 bzw. 20 mit dem Gurt 16. Jedes der Verbindungsprofile 26, 28, 30, 32 ist im Querschnitt einteilig. Der Querschnitt jedes Verbindungsprofils 26, 28, 30, 32 weist einen U-förmigen Abschnitt mit einer Basis 34 und zwei Schenkeln 36 auf, wie beispielhaft am Verbindungsprofil 30 gezeigt. An die Basis 34 des U-Profils schließen sich auf beiden Seiten Verbreiterungen 38, 40 an, deren äußere Enden die Breite des Verbindungsprofils 30 und die Breite einer ersten Fläche 42 des Verbindungsprofils 30 bestimmen, die mit dem Gurt 16 verklebt ist. Zwischen der ersten Fläche 42 des Verbindungsprofils 30 und dem Gurt 16 ist Klebstoff 44 angeordnet, insbesondere auf Basis eines Epoxydharzes. Die Verbreiterung 40 weist etwa die doppelte Breite der Verbreiterung 38 auf. Die Verbreiterung 38 erstreckt sich von der Basis 34 des U-förmigen Abschnitts in Richtung zu einer seitlichen Kante des Gurts 16, während sich die andere Verbreiterung 40 des Verbindungsprofils 30 von der Basis 34 des Verbindungsprofils 30 in Richtung zu der Mitte des Gurtes 16 hin erstreckt. Die Basis 34 des U-förmigen Abschnitts des Verbindungsprofils 30 und die beiden Verbreiterungen 38, 40 bilden gemeinsam eine Grundplatte des Verbindungsprofils 30, deren untere Fläche 42 eben ist.

Die Basis 34 und die beiden Schenkel 36 des U-förmigen Abschnitts des Verbindungsprofils 30 bilden eine Aufnahme für ein unteres Ende des Stegs 18. Die Innenseite eines Schenkels 36 bildet eine zweite Fläche des Verbindungsprofils, die mit einer Seitenfläche 24 des Stegs 18 verklebt ist. Auch die Innenseite des gegenüberliegenden Schenkels 36 ist mit dem Steg 18 verklebt, nämlich mit dessen gegenüberliegender Seitenfläche 24. Zwischen den Innenseiten der Schenkel 36 und den Seitenflächen 24 befindet sich ebenso Klebstoff wie zwischen der Innenseite der Basis 34 und der Stirnfläche 22 des Stegs 18.

Die vorstehenden Erläuterungen zum Aufbau des Verbindungsprofils 30 und dessen Verbindung mit dem Gurt 16 und dem Steg 18 gelten analog für die übrigen Verbindungsprofile 26, 28 und 32.

Figur 2 zeigt mögliche Ausgestaltungen von Verbindungsprofilen mit unterschiedlichen Querschnitten. Figur a) zeigt ein Verbindungsprofil 46 mit einem U-förmigen Querschnitt. Es weist eine Basis 48 und zwei Schenkel 50 auf, die miteinander verbunden sind. Die beiden Schenkel 50 verlaufen in paralleler Orientierung und im rechten Winkel zur Basis 48. Die von der Basis 48 entfernten Enden der beiden Schenkel 50 weisen jeweils eine Fläche 52 auf, die zu der zwischen den beiden Schenkeln 50 und der Basis 48 gebildeten Aufnahme hin geneigt ist.

Im Teil b) der Figur 2 ist ein weiteres Verbindungsprofil 54 im Querschnitt dargestellt. Es weist ebenfalls einen U-förmigen Abschnitt mit einer Basis 56 und zwei Schenkeln 58 auf. Zusätzlich gibt es eine Verbreiterung 60, die sich seitlich an die Basis 56 anschließt und eine Vergrößerung der ersten Fläche 62, die für die Verbindung mit einem Gurt vorgesehen ist, bewirkt.

Im Beispiel des Teils c) der Figur 2 ist ein weiteres Verbindungsprofil 64 gezeigt, das ebenfalls einen U-förmigen Abschnitt mit einer Basis 66 und zwei Schenkeln 68 aufweist, wie bezüglich Teil a) der Figur bereits erläutert. An die Basis 66 schließen sich zu beiden Seiten Verbreiterungen 70, 72 an. Die Verbreiterung 70 weist eine größere Breite auf als die Verbreiterung 72. Die Verbreiterungen 70, 72 bilden gemeinsam mit der Basis eine ebene Grundplatte des Verbindungsprofils 64.

Das in Teil d) der Figur 2 gezeigte Verbindungsprofil 74 hat einen insgesamt annähernd dreieckigen, einteiligen Querschnitt. Im Bereich einer nach oben weisenden Spitze des Dreiecks ist eine Aufnahme 76 ausgebildet, zu deren beiden Seiten jeweils dreieckige Abschnitte 78, 80 des Verbindungsprofils 74 angeordnet sind. Die beiden dreieckigen Abschnitte 78, 80 sind verbunden durch eine Basis 82 bzw. sind beide auf einer gedachten Grundplatte 82 angeordnet.

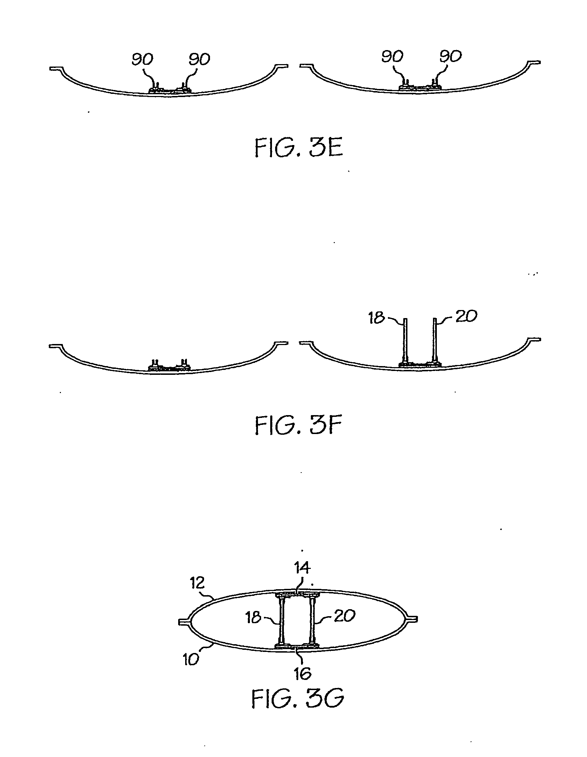

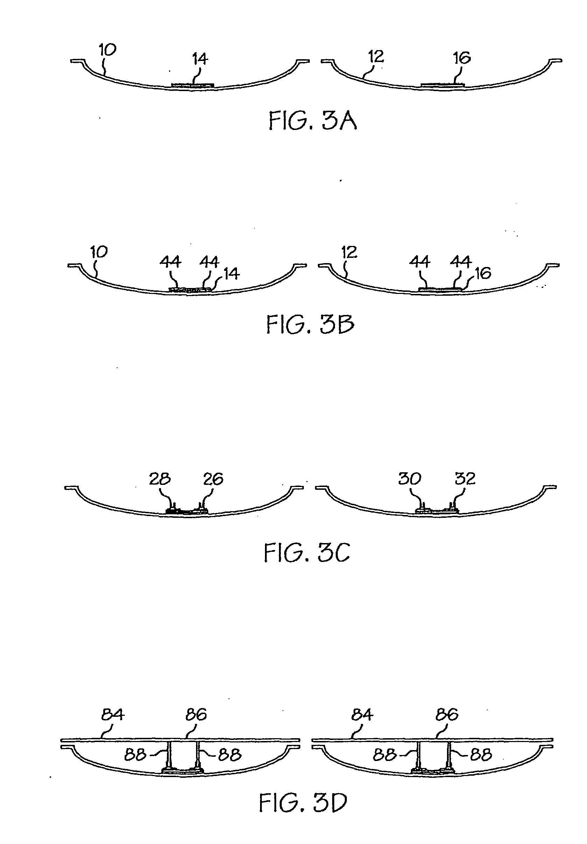

Anhand der Figur 3 sollen die Schritte des erfindungsgemäßen Verfahrens erläutert werden. Teil a) der Figur 3 zeigt zwei nebeneinander angeordnete Halbschalen 10, 12 eines Rotorblatts, die sich in den für die Fertigung der Halbschalen 10, 12 herangezogenen Formen, die nicht im Einzelnen dargestellt sind, befinden können. Die beiden Halbschalen 10, 12 sind nebeneinander angeordnet, wobei die der Innenseite des Rotorblatts zugewandten Seiten der Halbschalen 10, 12 nach oben weisen. Die Halbschale 10 weist einen etwa in ihrer Mitte in Längsrichtung des Rotorblatts verlaufenden Gurt 14, die Halbschale 12 einen etwa in ihrer Mitte ebenfalls in Längsrichtung des Rotorblatts verlaufenden Gurt 16 auf.

Im Teil b) der Figur 3 ist auf die Gurte 14, 16 Klebstoff 44 aufgetragen. Der Klebstoff 44 ist streifenförmig nahe der beiden seitlichen Kanten des Gurts 14, 16 im vorgesehenen Kontaktbereich zu den Verbindungsprofilen 26, 28, 30, 32 angeordnet.

In Teil c) der Figur sind zusätzlich zu den bereits beschriebenen Teilen die Verbindungsprofile 26, 28, 30 und 32 auf den zuvor aufgetragenen Klebstoff 44 aufgebracht. Die Verbindungsprofile 26, 28, 30, 32 sind jeweils so angeordnet, dass die zwischen zwei Schenkeln gebildeten Aufnahmen für die Stege der Innenseite des Rotorblatts zugewandt sind.

Teil d) der Figur zeigt die exakte Positionierung der Verbindungsprofile 26, 28, 30, 32 anhand von zwei Positionierhilfen. Die Positionierhilfen sind mechanische Halterungen 84, die jeweils einen Querträger 86 und zwei daran befestigte, nach unten weisende Träger 88 aufweisen. Jeder der Träger 88 greift in eine Aufnahme eines Verbindungsprofils 26, 28, 30, 32 ein und legt so die Position des jeweiligen Verbindungsprofils 26, 28, 30, 32 fest. Die Querträger 86 der Halterungen 84 stützen sich jeweils in definierter Position an den Rändern der Halbschalen 10, 12 bzw. an den Rändern der zugeordneten Formen ab. Dadurch wird eine exakte Positionierung der Verbindungsprofile 26, 28, 30, 32 bezüglich der Halbschalen 10, 12 gewährleistet.

Nach dem Aushärten des Klebstoffs 44 werden die Halterungen 84 entfernt und - wie in Teil e) der Figur gezeigt - die Aufnahmen der Verbindungsprofile 26, 28, 30, 32 mit Klebstoff 90 gefüllt, und zwar bis zu einem definierten Füllstand.

Anschließend werden, wie in Teil f) der Figur 3 gezeigt, die Stege 18, 20, ggfs. mit Hilfe einer geeigneten Stegsetzvorrichtung, in die Aufnahmen der Verbindungsprofile 30, 32 eingesetzt. Dabei tauchen sie in den Klebstoff 90 ein, sodass sich dieser zwischen den Begrenzungsflächen der Aufnahmen und den benachbarten Stirn- und Seitenflächen der Stege 18, 20 verteilt.

Im letzten Schritt des Verfahrens, dessen Ergebnis in Teil g) der Figur dargestellt ist, wird die Halbschale 10 auf die Halbschale 12 geklappt, wobei die Kanten der Halbschalen 10, 12 miteinander verklebt werden. Gleichzeitig werden die Stege 18, 20 in die mit dem Gurt 14 verbundenen Verbindungsprofile 26, 28, genauer gesagt in die von diesen gebildeten Aufnahmen, eingeführt und darin verklebt. Nach dem Aushärten des Klebstoffs 90 sind die beiden Gurte 14, 16 fest mit den Stegen 18, 20 verbunden.

## Patentansprüche

1. Rotorblatt für eine Windenergieanlage mit
• mindestens einem Paar einander gegenüberliegender Gurte (14, 16), die sich in Längsrichtung des Rotorblatts erstrecken und auf das Rotorblatt einwirkende Kräfte aufnehmen, und
• mindestens einem Steg (18, 20), der zwei Stirnflächen (22), die jeweils einem der beiden Gurte (14, 16) zugewandt sind, und zwei Seitenflächen (24) aufweist, sich zwischen den beiden Gurten (14, 16) in Längsrichtung des Rotorblatts erstreckt und fest mit den beiden Gurten (14, 16) verbunden ist, **gekennzeichnet durch**
• mindestens ein in Längsrichtung des Rotorblatts verlaufendes, aus einem faserverstärkten Kunststoffinaterial bestehendes, im Querschnitt ein- oder mehrteiliges Verbindungsprofil (26, 28, 30, 32) mit einer Aufnahme, in die der mindestens eine Steg (18, 20) eingesetzt ist, wobei
• eine erste Fläche (42) des Verbindungsprofils (26, 28, 30, 32) mit einem der Gurte (14, 16) verklebt ist und
• eine zweite Fläche des Verbindungsprofils (26, 28, 30, 32) mit einer ersten Seitenfläche (24) des mindestens einen Stegs (18, 20) verklebt ist.

2. Rotorblatt nach Anspruch 1, **dadurch gekennzeichnet, dass** die Aufnahme eine Nut in dem Verbindungsprofil (26, 28, 30, 32) ist.

3. Rotorblatt nach Anspruch 1 oder 2, **dadurch gekennzeichnet, dass** eine dritte Fläche des Verbindungsprofils (26, 28, 30, 32) mit einer zweiten, der ersten Seitenfläche (24) gegenüberliegenden Seitenfläche (24) des mindestens einen Stegs (18, 20) verklebt ist.

4. Rotorblatt nach einem der Ansprüche 1 bis 3, **dadurch gekennzeichnet, dass** das Verbindungsprofil im Querschnitt zweiteilig ist und aus zwei benachbart angeordneten Profilen besteht.

5. Rotorblatt nach einem der Ansprüche 1 bis 3, **dadurch gekennzeichnet, dass** das Verbindungsprofil (26, 28, 30, 32) im Querschnitt einteilig mit einem U-förmigen Abschnitt ist, der eine Basis (34) und zwei Schenkel (36) aufweist, die die Aufnahme bilden.

6. Rotorblatt nach Anspruch 5, **dadurch gekennzeichnet, dass** das Verbindungsprofil (26, 28, 30, 32) im Querschnitt mindestens eine Verbreiterung (38, 40) aufweist, die sich seitlich an die Basis (34) des U-förmigen Abschnitts anschließt.

7. Rotorblatt nach Anspruch 5 oder 6, **dadurch gekennzeichnet, dass** die von der Basis (34) entfernten Enden der Schenkel (36) im Querschnitt des Verbindungsprofils (26, 28, 30, 32) zu der Aufnahme hin geneigt sind.

8. Rotorblatt nach einem der Ansprüche 1 bis 7, **dadurch gekennzeichnet, dass** eine Stirnfläche (22) des mindestens einen Stegs (18, 20) mit dem Verbindungsprofil (26, 28, 30, 32) verklebt ist.

9. Rotorblatt nach einem der Ansprüche 1 bis 8, **dadurch gekennzeichnet, dass** in Längsrichtung des Rotorblatts mehrere Verbindungsprofile (26, 28, 30, 32) aneinander gereiht sind.

10. Rotorblatt nach einem der Ansprüche 1 bis 9, **dadurch gekennzeichnet, dass** sich der Querschnitt des Verbindungsprofils (26, 28, 30, 32) in Längsrichtung des Rotorblatts ändert.

11. Rotorblatt nach einem der Ansprüche 1 bis 10, **dadurch gekennzeichnet, dass** der mindestens eine Steg (18, 20) auch mit dem gegenüberliegenden Gurt (16) über ein Verbindungsprofil (30, 32) verbunden ist, wobei die Verbindung entsprechend einem der vorstehenden Ansprüche ausgestaltet ist.

12. Verfahren zur Herstellung eines Rotorblatts einer Windenergieanlage mit den folgenden Schritten:
• Bereitstellen einer ersten Halbschale (12), die einen ersten Gurt (16) aufweist, der sich in Längsrichtung des Rotorblatts erstreckt und auf das Rotorblatt einwirkende Kräfte aufnimmt,
• Verkleben einer ersten Fläche eines im Querschnitt ein- oder mehrteiligen Verbindungsprofils (30, 32) mit dem ersten Gurt (16), wobei das Verbindungsprofil (30, 32) in Längsrichtung des Gurtes angeordnet ist und aus einem faserverstärkten Kunststoffmaterial besteht,
• Einsetzen mindestens eines Stegs (18, 20), der eine Stirnfläche (22), die im fertigen Rotorblatt dem ersten Gurt (16) zugewandt ist, und zwei Seitenflächen (24) aufweist, in eine Aufnahme des Verbindungsprofils (30, 32),
• Verkleben einer zweiten Fläche des Verbindungsprofils (30, 32) mit einer ersten Seitenfläche (24) des mindestens einen Stegs (18, 20),
• Verbinden einer zweiten Halbschale (10), die einen im fertigen Rotorblatt dem ersten Gurt (16) gegenüberliegenden zweiten Gurt (14) aufweist, mit der ersten Halbschale (12) und dem mindestens einen Steg (18, 20).

13. Verfahren nach Anspruch 12, **dadurch gekennzeichnet, dass** für das Verkleben der ersten Fläche des Verbindungsprofils (30, 32) mit dem ersten Gurt (16) und/oder der zweiten Fläche des Verbindungsprofils (30, 32) mit der ersten Seitenfläche (24) des mindestens einen Stegs (18, 20) eine Positionierhilfe verwendet wird.

14. Verfahren nach Anspruch 12 oder 13, **dadurch gekennzeichnet, dass** die Aufnahme des Verbindungsprofils (30, 32) vor dem Einsetzen des mindestens einen Stegs (18, 20) bis zu einem vorgegebenen Füllstand mit Klebstoff (90) gefüllt wird.

15. Verfahren nach einem der Ansprüche 12 bis 14, **dadurch gekennzeichnet, dass** zur Verbindung des mindestens einen Stegs (18, 20) mit dem zweiten Gurt (14) ebenfalls ein Verbindungsprofil (26, 28) mit einer Aufnahme für den mindestens einen Steg (18, 20) verwendet wird, wobei dieses Verbindungsprofil (26, 28) mit dem zweiten Gurt (14) und einer Seitenfläche des mindestens einen Stegs (18, 20) verklebt wird.
